Europäisches Patentamt

European Patent Office

Office européen des brevets

(19)

(11) Numéro de publication: **0 021 997**
**B1**

(12) **FASCICULE DE BREVET EUROPEEN**

(45) Date de publication du fascicule du brevet:
04.08.82

(51) Int. Cl.³: **B 01 J  47/00,** G 01 J  3/10

(21) Numéro de dépôt: **80400902.5**

(22) Date de dépôt: **18.06.80**

(54) Procédé pour la concentration d'un élément contenu en faible teneur dans une solution.

(30) Priorité: **18.06.79  FR 7915571**

(43) Date de publication de la demande:
**07.01.81 Bulletin 81/1**

(45) Mention de la délivrance du brevet:
**04.08.82 Bulletin 82/31**

(84) Etats contractants désignés:
**AT BE CH DE GB IT LI LU NL SE**

(56) Documents cités:
**DE-B-2 643 650**
**GB-A-1 368 810**
**US-A-3 915 642**
**ANALYTICAL CHEMISTRY, vol. 33, no. 1, janvier 1961 Columbus, Ohio, US W. G. SCHRENK et al.: »Flame photometric determination of copper in mineral mixes«, pages 106—108.**
**CHEMICAL ABSTRACTS, vol. 53, no. 19, 1959, ref. 17747f Columbus, Ohio, US K. SCHARRER et al.: »The use of ion exchangers in flame spectrophotometry«**

(73) Titulaire: **INSTRUMENTS S.A., 8 rue de la Rochefoucauld, F-75009 Paris (FR)**

(72) Inventeur: **Govindaraju, Kuppusami, Chemin de Ludres, F-54180 Heillecourt Houdemont (FR)**

(74) Mandataire: **Dupuy, Louis et al, CREUSOT-LOIRE 15 rue Pasquier, F-75383 Paris Cedex 8 (FR)**

**CHEMICAL ABSTRACTS, vol. 81, 1974, ref. 32795b, page 507 Columbus, Ohio, US L. WODKIEWICZ et al.: »Separation of trace amounts of rare earths from uranium by ion-exchange chromatography in aqueous-non-aqueous solutions«.**
**CHEMICAL ABSTRACTS, vol. 89, 1978 ref. 70239w, page 700 Columbus, Ohio, US J. VITKOVA et al.: »Combustion of ion exchangers in high-frequency plasma. Special determination of trace amounts of cadmium and lead ions adsorbed on cation exchangers«.**

BUNDESDRUCKEREI BERLIN

## Procédé pour la concentration d'un élément contenu en faible teneur dans une solution

La présente invention concerne un procédé de concentration d'un élément ou d'un groupe d'éléments contenus en faibles teneurs dans une solution en vue de leur dosage, par exemple par spectrométrie d'émission avec une source à plasma inductif.

Dans un appareil d'analyse, par plasma-spectrométrie d'émission d'un élément en solution, la solution est amenée vers un nébuliseur où elle est transformée en aérosol. L'aérosol est ensuite introduit dans une source à plasma inductif où il est excité et émet un rayonnement caractéristique des éléments contenus dans la solution. Ce rayonnement est dispersé en spectres dans un spectromètre, et on mesure une raie spectrale caractéristique de chaque élément à doser, l'intensité mesurée étant proportionelle à la concentration de l'élément.

Une telle technique d'analyse se heurte à des difficultés pratiques lorsque la solution étudiée, ou l'échantillon préalablement mis en solution, contient un élément ou un groupe d'éléments en fortes teneurs, souvent appelé »matrice«, alors que l'on s'intéresse à d'autres éléments, en teneurs au contraire extrêmement faibles. C'est le cas par exemple, lorsque l'on veut doser des éléments tels que le plomb, le fer ou le cuivre dans l'eau de mer dont la teneur pour ces éléments en traces peut être de quelques ppb (partie par billion c'est-à-dire partie par $10^{12}$) alors que la teneur en chlorure de sodium est de l'ordre de 3%.

Ce sera encore le cas pour le dosage d'éléments tels que l'uranium dans une roche où l'on trouve en teneurs élevées, du silicium, de l'aluminium, du fer, du calcium, du magnésium, du sodium et du potassium.

Dans de tels cas, l'émission de raies est affectée par la composition chimique de la matrice. Il en résulte que le fond spectral engendré par la matrice varie selon le type d'échantillon à analyser. Dans ces conditions, pour un élément en très faible teneur, le signal émis, enregistré sous forme d'un pic sur une courbe tracée, ne ressort pas de façon nette et claire, mais reste souvent confondu avec le fond. En d'autres termes, le rapport signal sur fond n'est pas suffisamment élevé pour une mesure sûre. D'autre part, un ou plusieurs éléments de la matrice peuvent causer une interférence spectrale, par exemple, les interférences par le fer et le calcium sur le dosage de l'uranium dans une roche.

On a donc été amené à rechercher une méthode de concentration de l'élément considéré, et on a pour cela appliqué la technique d'échange d'ions. Mais, en pratique courante, cette technique est généralement appliquée pour la séparation d'un élément considéré et non pour son enrichissement. Pour la séparation par échange d'ions, on utilise habituellement une colonne en verre de 1 à 3 cm de diamètre, remplie de résine sur des hauteurs de 10 à 50 cm; on fait passer un volume important de solution à travers la colonne pour une première étape de fixation de l'élément considéré; pour l'étape suivante d'élution, on fait passer un volume important de solution d'un agent d'élution. A la fin de l'opération, l'élément considéré est séparé mais se trouve dans un volume important de solution. Pour sa concentration, il faut évaporer cette solution à sec et reprendre le résidu avec un volume minimum de solution. Le résidu peut contenir des sels introduits par l'agent d'élution, par exemple $NH_4Cl$, qui peut rendre longue et délicate l'étape d'évaporation. Toutes ces opérations rendent pratiquement impossibles les analyses continues ou séquentielles.

La présente invention permet de remédier à ces inconvénients et s'applique en premier lieu à un procédé pour assurer en même temps, dans un échantillon de solution, la concentration d'un élément contenu en très faible teneur, notamment en traces, et l'élimination d'un élément ou d'un groupe d'éléments contenus en teneurs relativement fortes, notamment de l'ordre de 3‰, en vue de leurs dosage par des méthodes utilisant une source d'excitation, procédé selon lequel on fait passer la solution à travers une colonne de résine échangeuse d'ions à fixation spécifique de l'élément de très faible teneur et élution ultérieure de ce dernier hors de la résine. Selon l'invention on dispose la résine dans une colonne de faible diamètre de 1 à 3 mm, sur une hauteur de 1 à 10 cm, dans laquelle on fait passer la solution, et on utilise, pour l'élution de l'élément à très faible teneur, un volume de liquide très faible par rapport au volume de l'enchantillon de solution initiale et tel que le liquide d'élution est utilisable directement pour le dosage, sans concentration intermédiaire.

L'invention a été particulièrement développée pour le dosage par spectrométrie d'émission à plasma inductif. Dans ce cas l'élément considéré est d'abord concentré dans une colonne selon le procédé ci-dessus; on introduit ensuite directement dans le plasma tout le liquide d'élution, de telle sorte que la totalité de l'élément contenu dans l'échantillon initial de la solution est amené à la fois dans le plasma et participe à l'excitation et l'émission du spectre par la source à plasma.

L'invention sera mieux comprise en se référant à deux exemples d'application donnés ci-après:

### Exemple 1
#### Dosage du cuivre dans l'eau de mer

On utilise une mini-colonne constituée par un tube en plastique de diamètre intérieur d'environ 2,5 mm, par exemple en chlorure de polyvinyle, dans lequel on dispose une résine échangeuse d'ions spécifique pour cuivre, par exemple, une résine complexante vendue sous la marque commerciale Chelex 100 (200—400 mesh); la résine est maintenue en place dans le tube par deux bouchons de laine de verre, le lit de résine étant de 10 cm de longueur.

On fait passer 200 cm$^3$ d'eau de mer, préalablement conditionnée et amenée à pH 7 si nécessaire, au moyen d'une pompe péristaltique usuelle disposée entre le porte-échantillon et la mini-colonne; on rince ensuite la colonne à l'eau distillée et déminéralisée. Le cuivre contenu dans l'échantillon est fixé sur la résine mais le sodium de l'eau de mer est éliminé comme effluent.

La mini-colonne est connectée au capillaire du nébuliseur de l'appareil d'analyse et on procède à l'élution du cuivre avec de l'acide chlorhydrique 5N à l'aide d'une pompe péristaltique. On observe alors qu'il suffit de 1 cm$^3$ d'acide pour éluer totalement le cuivre préalablement contenu dans les 200 cm$^3$ de l'échantillon, ce qui correspond à un facteur de concentration de 200. Grâce à cette concentration et à l'élimination de l'élément sodium prépondérant de la matrice, le pic enregistré sur la courbe tracée par l'appareil est net, permettant ainsi le dosage du cuivre jusqu'à 1 ppb. On notera aussi que plusieurs autres éléments bi-valents comme le plomb, le nickel, le cadmium, le zinc, le cobalt, le manganèse sont élués en même temps que le cuivre, ce qui permet d'envisage un dosage différé ou simultané de ces éléments.

Exemple 2
Dosage de l'uranium dans une roche silicatée

L'échantillon de roche est décomposé par fusion au borate de lithium. 500 mg du produit de fusion sont mis en solution avec 50 cm$^3$/d'acide chlorhydrique (1N) plus 1 g d'acide ascorbique. La solution finale est ajustée à pH 3.

On prépare une mini-colonne de mêmes dimensions que pour l'exemple 1 mais avec une résine vendue sous la marque commerciale Amberlite CG (200—400 mesh). La colonne est conditionée avec 10 cm$^3$ d'une solution d'acide chlorhydrique contenant 2% d'acide ascorbique, ajustée à pH 3 (solution de rinçage). On passe ensuite la solution de 50 cm$^3$ à travers la mini-colonne au moyen d'une pompe péristaltique. La colonne est rincée avec la solution de rinçage à pH 3. Dans ces conditions de travail, l'uranium reste sur la résine, la matrice étant éliminée complètement.

Après le raccordement de la mini-colonne au capillaire du nébuliseur d'un spectromètre d'émission à plasma inductif, on élue la colonne avec de l'acide chlorhydrique 5N pour doser l'uranium. La limite de dosage est 1 ppm (partie par million), la gamme normale du dosage étant 1 à 30 ppm.

A propos de ces exemple, on pourra noter que ce procédé se prête particulièrement bien à des analyses multi-élémentaires d'un même échantillon, ou à l'analyse séquentielle de plusieurs échantillons. L'utilisation de mini-colonnes permet en effet de partager l'échantillon initial pour le répartir en parallèle sur plusieurs mini-colonnes regroupées en parallèle sur un même porte-colonnes, chaque mini-colonne étant alors garnie d'une résine spécifique de l'un ou l'autre des éléments que l'on cherche à doser. On pourrait aussi disposer en parallèle plusieurs mini-colonnes garnies de la même résine, mais alimentées chacune au moyen de la même pompe péristallique, à partir d'échantillons différents.

Chaque groupe de mini-colonnes ainsi activé parallèlement, peut alors, après montage sur le spectro-analyseur, donner facilement lieu à des opérations séquentielles d'élution, puisque le transfert dans le plasma de la totalité de l'élément capté par une colonne se fait en une seule fois pour chaque colonne. Le résultat sous forme de diagramme de l'analyseur traduira donc, ou bien successivement la teneur de chaque élément concerné ou bien successivement la teneur en un élément d'une série d'échantillons.

Bien entendu, l'invention n'est pas strictement limitée aux modes de réalisation qui viennent d'être décrits à titre d'exemples, mais elle couvre également les réalisations qui n'en différeraient que par des détails, par des variantes d'exécution ou par l'utilisation de moyens équivalents.

On a ainsi pu établir que les résultats décrits ci-dessus pouvaient être obtenus tant que la colonne contenant la résine restait d'un diamètre interne suffisamment faible, et pratiquement de 1 à 3 mm, la hauteur de résine dans la colonne étant alors de 1 à 10 cm.

En outre le procédé de concentration proprement dit trouve également son application avec d'autres sources d'excitation employées en spectrométrie d'émission, en absorption atomique, en spectrophotométrie, spectofluorimétrie et spectrométrie de fluorescence-X. Il peut aussi être utilisé pour enrichir la solution en l'élément considéré, ou pour la récupération de cet élément.

**Revendications**

1. Procédé pour assurer en même temps, dans un échantillon de solution, la concentration d'un élément contenu en très faible teneur, notamment en traces, et l'élimination d'un élément ou d'un groupe d'éléments contenus en teneurs relativement fortes, notamment de l'ordre de 3%o, en vue de leur dosage par des méthodes utilisant une source d'exitation, selon lequel on fait passer la solution à travers une colonne de résine échangeuse d'ions à fixation spécifique de l'élément à très faible teneur et élution ultérieure de ce dernier hors de la résine, caractérisé par le fait qu'on dispose la résine dans une colonne de faible diamètre de 1 à 3 mm, sur une hauteur de 1 à 10 cm, dans laquelle on fait passer la solution, et par le fait qu'on utilise pour ladite élution de l'élément à très faible teneur, un volume de liquide très faible par rapport au volume de l'échantillon de solution initale et tel que le liquide d'élution est utilisable directement pour le dosage, sans concentration intermédiaire.

2. Procédé de dosage d'un élément contenu à très faible teneur dans une solution, notamment en traces, par spectro-émission dans un plasma inductif, procédé selon lequel on amène dans un plasma inductif la solution préalablement nébulisée et on analyse le spectre émis, caractérisé par le fait que l'on concentre l'élément considéré par le procédé selon revendication 1, et par le fait qu'on introduit directement dans le plasma tout le liquide d'élution de telle sorte que la totalité de l'élément contenu dans le volume initial de la solution est amené à la fois dans le plasma et participe principalement à l'émission du spectre.

## Patentansprüche

1. Verfahren zur Konzentrierung eines in einer Lösungs-Probe in sehr geringer Konzentration, insbesondere in Spurenkonzentration, vorliegenden Elementes und zur gleichzeitigen Eliminierung eines bzw. einer in der Probe vergleichsweise in großer Konzentration, insbesondere in der Größenordnung um 3%, vorliegenden Elementes bzw. Gruppe von Elementen, um eine quantitative Analyse nach einer Methode, bei der eine Anregungs-Quelle benutzt wird, durchzuführen, wobei die Lösung zur spezifischen Fixierung des in sehr geringen Mengen enthaltenen Elementes über eine Ionenaustauscher-Harz-Kolonne geführt wird und letzteres danach aus dem Ionenaustauscher-Harz eluiert wird, dadurch gekennzeichnet, daß man das Harz in einer Kolonne mit einem geringen Durchmesser von 1 bis 3 mm in einer Höhe von 1 bis 10 cm anordnet, über welche Kolonne man die Lösung führt und daß man für die Elution des in sehr geringer Konzentration vorliegenden Elementes ein im Vergleich zum ursprünglichen Volumen der Probe der Lösung sehr geringes Flüssigkeitsvolumen einsetzt, so daß die Elutions-Flüssigkeit ohne Zwischenschaltung einer Konzentration direkt für die quantitative Analyse verwendbar ist.

2. Verfahren zur quantitativen Analyse eines Elementes, das in sehr geringer Konzentration, insbesondere in Spurenkonzentration, in einer Lösung enthalten ist, mittels Spektral-Emission in einem Induktiv-Plasma, wobei die vorher vernebelte Lösung in ein induktives Plasma eingebracht wird und das emittierte Spektrum analysiert wird, dadurch gekennzeichnet, daß man das in Betracht gezogene Element gemäß dem Verfahren nach Anspruch 1 konzentriert und daß die gesamte Elutions-Flüssigkeit direkt in das Plasma so eingebracht wird, daß die gesamte Menge des im ursprünglichen Volumen der Probe-Lösung enthaltenen Elementes auf einmal in das Plasma eingebracht wird ˌund hauptsächlich an der Emission des Spektrums beteiligt ist.

## Claims

1. Process for simultaneously carrying out, in a sample of solution, the concentration of an element present in a very low proportion, in particular in trace amounts, and the removal of an element or a group of elements present in relatively high proportions, in particular of the order of 3‰, for the purpose of determining them by methods using a source of excitation, in which process the solution is passed through a column of ion exchange resin for specific attachment of the element present in a very low proportion, and the latter is subsequently eluted from the resin, characterized in that the resin is placed in a column with a small diameter of 1 to 3 mm, to a height of 1 to 10 cm, into which column the solution is passed, and in that the said elution of the element present in a very low proportion is carried out using a volume of liquid which is very small relative to the volume of the sample of initial solution, and which is such that the elution liquid can be used directly for the determination, without intermediate concentration.

2. Process for the determination of an element present in a very low proportion in a solution, in particular in trace amounts, by spectral emission in an inductive plasma, in which process the solution, converted to a spray beforehand, is introduced into an inductive plasma and the spectrum emitted is analysed, characterized in that the element in question is concentrated by the process according to Claim 1, and in that all the elution liquid is introduced directly into the plasma, so that the total amount of the element present in the initial volume of the solution is introduced into the plasma all at once and takes part mainly in the emission of the spectrum.